# EUROPÄISCHE PATENTSCHRIFT

(11) **EP 4 313 519 B1**
(45) Veröffentlichungstag und Bekanntmachung des Hinweises auf die Patenterteilung: **26.11.2025**
(21) Anmeldenummer: 22718095.7
(22) Anmeldetag: 22.03.2022
(51) Int. Cl.: B25J 15/02, B25J 9/16, B25J 17/02

(54) **SYSTEM UND VERFAHREN ZUR ABARBEITUNG EINER MONTAGEAUFGABE MITTELS EINES ROBOTERS**
SYSTEM AND METHOD FOR EXECUTING AN ASSEMBLY TASK BY MEANS OF A ROBOT
SYSTÈME ET PROCÉDÉ POUR EXÉCUTER UNE TÂCHE D'ASSEMBLAGE AU MOYEN D'UN ROBOT

(30) Priorität: 31.03.2021 DE 102021108201
(43) Veröffentlichungstag der Anmeldung: 07.02.2024
(73) Patentinhaber: FFT Produktionssysteme GmbH & Co. KG, 36041 Fulda (DE)
(72) Erfinder: KILLER, Alexander, 36367 Wartenberg (DE); KRAFT, Martin, 36124 Eichenzell (DE)
(74) Vertreter: SSM Sandmair
(86) Internationale Anmeldenummer: PCT/EP2022/057492
(87) Internationale Veröffentlichungsnummer: WO 2022/207409

(56) Entgegenhaltungen:
- EP-A1- 0 846 529

## Beschreibung

Die Erfindung betrifft ein System und ein Verfahren zur kontrollierten Abarbeitung einer Montage- oder Fertigungsaufgabe. Die Montageaufgabe kann ein Auftragen eines fließfähigen Mediums, wie insbesondere eines Klebers oder Klebstoffs, auf einem Werkstück sein. Das Auftragen kann beispielsweise ein Ablegen oder Sprühen sein. Die Montageaufgabe kann stattdessen aber auch ein Greifen oder ein Umformen oder ein Fügen eines Werkstücks oder mehrerer Werkstücke sein. Das System umfasst einen n-achsigen Roboter, vorzugsweise einen Industrie- oder Universalroboter, mit einer Basis und einem mit der Basis verbundenen Gelenkarm, der in n Maschinenachsen des Roboters relativ zur Basis beweglich ist. Das System umfasst ferner eine Robotersteuerung zur Steuerung und/oder Regelung der Bewegungen des Gelenkarms in den n Maschinenachsen. Die Robotersteuerung kann insbesondere dazu eingerichtet, den Roboter in allen seinen Freiheitsgraden der Bewegung zu steuern und/oder zu regeln.

Für die Zwecke der Erfindung geeignete Gelenkarmroboter, wie etwa Universal- oder Industrieroboter, weisen typischerweise einen letzten Gelenkarmabschnitt auf, der dazu eingerichtet ist, ein Werkzeug zur Abarbeitung einer Montageaufgabe, wie die vorstehend beispielhaft genannten, aufzunehmen. Typische Werkzeuge, wie etwa Greifer, Schweißwerkzeuge, Falzwerkzeuge und Klebeauftragswerkzeuge, weisen relativ zueinander bewegliche Funktionsglieder und auch einen eigenen Antrieb mit einem oder mehreren rotativen und/oder translatorischen Motoren oder Stellglieder oder Antriebe bzw. eine oder mehrere Antriebseinheit/en für eines oder mehrere der Funktionsglieder auf. Beispiele derartiger Werkzeuge sind aus der WO 2014/126675 A1, der EP 2 307 167 B1 und der EP 2 117 745 B1 bekannt. Der werkzeugeigene Antrieb erfordert eine Antriebssteuerung, die an die von Hause aus vorhandene Robotersteuerung angepasst werden muss, damit die Bewegungen der Funktionsglieder des Werkzeugs und die Bewegungen des Roboters zur Abarbeitung der Montageaufgabe aufeinander abgestimmt sind. Der damit verbundene Aufwand ist beachtlich.

EP 0 846 529 A1 offenbart einen Roboter, dessen Handachse zum Antreiben eines Werkzeugs genutzt wird.

Es ist eine Aufgabe der Erfindung, ein System der genannten Art mit reduziertem Aufwand bereitzustellen.

Eine Aufgabe kann darin bestehen, den Aufwand zu reduzieren, der hinsichtlich der Steuerung und/oder Regelung des Werkzeugs zu betreiben ist.

Wünschenswert ist die Reduzierung der Anzahl von Komponenten und/oder die Vereinfachung einer oder mehrerer Komponenten des Werkzeugs.

Gegenstand der Erfindung ist ein System nach Anspruch 1.

Die Erfindung nutzt eine der Maschinenachsen des Roboters, also eine der Maschinenachsen, über die der Roboter von Hause aus verfügt, um die Funktion des Werkzeugs zu erfüllen. Zugleich wird der für die Steuerung und/oder Regelung des den Roboter und das Werkzeug umfassenden Systems reduziert, indem die beim Roboter schon vorhandene Robotersteuerung unmittelbar in die Funktion des Werkzeugs integriert wird. Der Roboterantrieb für das Robotergelenk, das den ersten Gelenkarmabschnitt und den zweiten Gelenkarmabschnitt verbindet, d. h. der Roboterantrieb für die betreffende Gelenkachse, kann einen sonst beim Werkzeug vorzusehenden Antriebsmotor, beispielsweise einen elektrischen, pneumatischen oder hydraulischen Drehmotor oder Linearmotor, ersetzen.

Gesteuert oder geregelt werden kann beispielsweise wenigstens eines von Bewegungsrichtung, Abfahren einer vorgegebenen Bewegungskurve, Druck, mit dem das zweite Funktionsglied auf ein Werkstück einwirkt, Einwirkungszeit auf das Werkstück an einem Punkt, Drehwinkelposition des zweiten Funktionsglieds, und zahlreichen anderen Bewegungs-, Zeit- und Druckparametern des zweiten Funktionsglieds in Abhängigkeit von der abzuarbeitenden Montageaufgabe. Bevorzugt ist entweder der erste Gelenkarmabschnitt oder insbesondere der zweite Gelenkarmabschnitt ein von der Basis über die n Maschinenachsen entfernter, letzter Gelenkarmabschnitt des Roboters ist. Dieser Gelenkabschnitt kann auch als Roboterhand bezeichnet werden.

Das erste Funktionsglied kann eine zum Beispiel elastisch teleskopierbare oder zur Seite bewegbare Schutzeinrichtung für das zweite Funktionsglied umfassen, die relativ zu dem ersten Gelenkarmabschnitt bewegt wird, um das zweite Funktionselement freizugeben, wenn das Werkzeug zur Abarbeitung der Montageaufgabe an ein Werkstück herangeführt wird. Auch in diesem Fall bewegt sich im Sinne dieser Anmeldung das erste Funktionsglied nicht relativ zum ersten Gelenkarmabschnitt. Die Schutzeinrichtung kann eine Absaugung umfassen, so dass zum Beispiel bei einem spanabhebenden Verfahren anfallende Späne und/oder ein zugeführtes Kühlmittel am Ort des Entstehens abgeführt werden können. Die Schutzeinrichtung kann auch eine Abdichtung des Bearbeitungsraums bilden, so dass beispielsweise in einer Schutzgasatmosphäre oder mit einem flüssigen Kühlmittel gearbeitet werden kann. Mit dem ersten Funktionsglied und/oder dem ersten Gelenkarmanschnitt kann ferner ein Sensor, beispielweise ein bildgebender Sensor verbunden sein, mit dem insbesondere die Qualität der ausgeführten Arbeit, der Zustand des Bearbeitungsbereichs vor der Bearbeitung und/oder die Position des zweiten Funktionsglieds relativ zum Werkstück kontrolliert und überwacht werden kann. Ferner kann der Sensor genutzt werden, um die Qualität der Arbeit nachvollziehbar zu dokumentieren.

Bevorzugt ist es, wenn die Maschinenachse, in Bezug auf die der zweite Gelenkarmabschnitt relativ zum ersten Gelenkarmabschnitt beweglich ist, die n-te Maschinenachse des Roboters und n eine natürliche Zahl größer 2 und vorzugsweise gleich 6 ist. So kann beispielsweise die Roboterhand respektive der zweite Gelenkarmabschnitt die sechste Maschinenachse umfassen, und die Roboterhand kann in der fünften Maschinenachse mit dem in Richtung Basis benachbarten oder dem ersten Gelenkarmabschnitt oder, wenn der zweite Gelenkarmabschnitt der letzte Gelenkarmabschnitt des Gelenkarms des Roboters ist, vorletzten Gelenkarmabschnitt verbunden sein.

Die n-te Maschinenachse oder die Maschinenachse der Roboterhand kann eine Rotationsachse, eine Schubachse oder eine Rotationsschubachse des zweiten oder n-ten Gelenkabschnitts oder der Roboterhand sein. Dabei kann das n der Maschinenachsen für eine andere natürliche Zahl stehen als das n der Gelenkarmabschnitte.

Bei dem Werkzeug handelt es sich um eine Schweißzange oder ein Materialabgabewerkzeug zur Abgabe von fließfähigem Material.

Das Werkzeug bzw. das zweite Funktionsglied des Werkzeugs kann direkt oder über ein Kopplungsglied oder eine Getriebe etc. mit der n-ten Maschinenachse verbunden sein oder mit der n-ten Maschinenachse verbunden werden.

Bei der Montage- oder Fertigungsaufgabe kann es sich insbesondere um eine Montage- oder Fertigungsaufgabe auf dem Gebiet der Herstellung, insbesondere der Karosserieherstellung, für Flugkörper, Land- und Wasserfahrzeuge handeln. Die Montageaufgabe kann ein Verbinden von zwei Werkstücken, ein Füllen von zum Beispiel unvermeidlichen Montagespalten, ein Aufbringen von Markern, ein Druckverformen, ein Aufbrechen vorbereiteter Öffnungen, ein Vorbereiten von Oberflächen für weitere Bearbeitungsschritte und zahlreiche andere Aufgaben umfassen.

Ein zweiter Aspekt der Erfindung betrifft ein Verfahren nach Anspruch 8.

Dabei kann das erste Funktionsglied eine Führung für das zweite Funktionsglied bilden, die das zweite Funktionsglied linear führt.

Das erste Funktionsglied kann zwei oder mehr zueinander bewegliche Elemente umfassen, beispielsweise eine teleskopierbare Schutzeinrichtung für das zweite Funktionselement.

Zur Überwachung zum Beispiel der Qualität der mit dem Werkzeug ausgeführten Arbeit kann der Industrieroboter eine Sensoreinrichtung umfassen, wie einen bildgebenden Sensor, der den von dem zweiten Funktionselement bearbeiten Werkstückbereich vor, während und nach der Bearbeitung überwacht und/oder kontrolliert.

Die Sensoreinrichtung kann mit dem Roboter respektive zum Beispiel dem ersten Gelenkarmabschnitt oder an dem ersten Funktionselement angebracht sein. Es können auch der zweite Gelenkarmabschnitt und das erste Funktionselement jeweils eine Sensoreinrichtung umfassen. Schließlich können die Sensoren auch anderweitig platziert sein, zum Beispiel an einem separaten Roboter, der nur die Sensoreinrichtung trägt oder einer Werkstückhalterung, solange sie die ihnen zugedachte Kontrollaufgabe erfüllen können.

Ferner umfasst das System eine Steuerung oder Regelung für den Roboter. Dies kann eine Robotersteuerung sein, die vom Roboter umfasst, beispielsweise in der Basis oder neben dem Roboter angeordnet ist. Die Steuerung oder Regelung umfasst eine Speichereinheit und eine Schnittstelle, über die Programme in die Speichereinheit eingelesen und die Programme abgeändert, zum Beispiel angepasst oder upgedated, werden können. Die Steuerung kann ferner eine Rechnereinheit umfassen, die die einzelne Programmschritte in Aktionsbefehle für das System respektive einzelne Teile des Systems umwandelt. Bevorzugt steuert oder regelt die Steuerung auch die Funktion der optionalen Sensoreinrichtung und/oder einer notwendige Vorrichtung, wie zum Beispiel für die Zufuhr eines Druckmittels zum Öffnen und/oder Schließen eines Ventils des Werkzeugs oder die Zufuhr von Verbrauchsmittel zu dem Werkzeug, die direkt mit dem Werkzeug verbunden sind.

Der für das Verfahren benutzte n-achsige Roboter kann ein Industrieroboter sein und eine Basis und n Bewegungsachsen für einen Roboterarm mit k Gelenkarmabschnitten umfassen. Der k-te Gelenkarmabschnitt bildet bevorzugt die Roboterhand. Dabei kann die Zahl n der Bewegungsachsen gleich oder unterschiedlich der Zahl k der Gelenkarmabschnitte sein.

Das Verfahren kann insbesondere für Montageaufgaben auf dem Gebiet der Herstellung, insbesondere der Karosserieherstellung, für Flugkörper, Land- und Wasserfahrzeuge verwendet werden. Die Montageaufgabe kann ein Verbinden von zwei Werkstücken, ein Füllen von zum Beispiel unvermeidlichen Montagespalten, ein Aufbringen von Markern, ein Druckverformen, ein Aufbrechen vorbereiteter Öffnungen, ein Vorbereiten von Oberflächen für weitere Bearbeitungsschritte und zahlreiche andere Aufgaben umfassen.

Im Folgenden werden Ausführungsbeispiele der Erfindung anhand von Figuren näher erläutert. Die Figuren zeigen:
- Figur 1:: Schematische Darstellung eines Roboters mit n Maschinenachsen und k Gelenkarmabschnitten;
- Figur 2:: Werkzeug verbunden mit der n-ten Maschinenachse und dem k-ten Gelenkarmabschnitt;
- Figur 3:: Werkzeug zur kontrollierten Abgabe eines fließfähigen Materials, wie eines Klebstoffs;
- Figur 4:: Werkzeug als Hohlnietstanzzange oder Schweißzange;

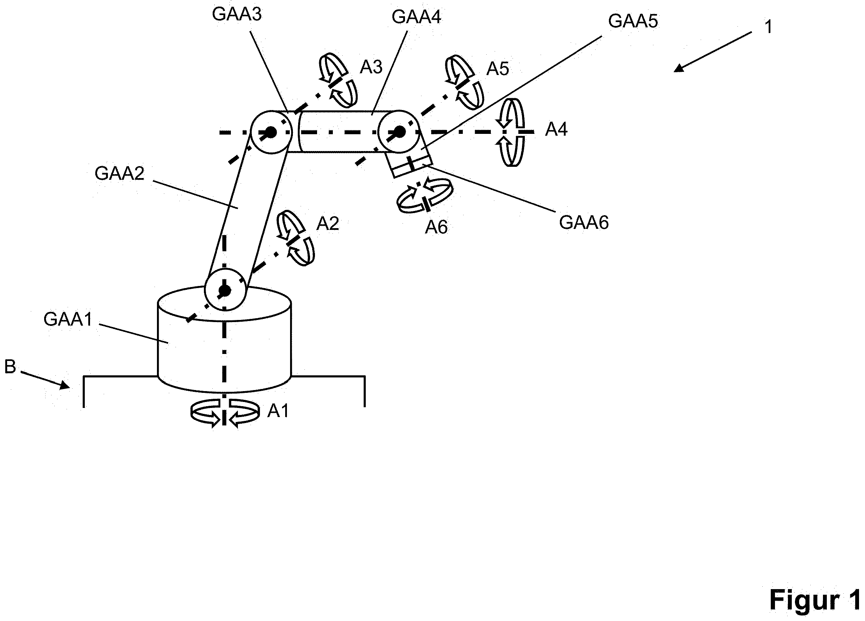

Die Figur 1 zeigt beispielhaft einen Gelenkarmroboter 1, wie er in der Industrie für Montageaufgaben eingesetzt wird. Der Gelenkarmroboter 1 kann mit einer Basis B verbunden sein. Die Basis B kann mit zum Beispiel einem Hallenboden, einer Hallenwand oder einer Hallendecke fest verbunden sein, so dass der Gelenkarmroboter 1 ortsfest installiert ist. Die Basis B kann hergerichtet sein, um auf Schienen oder an einem Deckenkran bewegt zu werden, so dass der Gelenkarmroboter 1 im Ganzen im Raum bewegbar ist.

Der Gelenkarmroboter 1 umfasst k Gelenkarmabschnitte GAA und n Maschinenachsen A. Zwei längs des Gelenkarms unmittelbar aufeinanderfolgende Gelenkarmabschnitte GAA sind in jeweils einem Robotergelenk um jeweils wenigstens eine der Maschinenachsen A beweglich miteinander verbunden. Im Ausführungsbeispiel ist k = n = 6. Grundsätzlich kann die Anzahl der Gelenkarmabschnitte GAA auch von der Anzahl der Maschinenachsen abweichen, beispielsweise kleiner als die Anzahl der Maschinenachsen A sein, so beispielsweise, falls eines der Robotergelenke mehr als einen Freiheitsgrad der Bewegung hat, wie etwa ein sphärisches Gelenk. Im Ausführungsbeispiel haben die Gelenke jedoch jeweils nur einen Freiheitsgrad der Bewegung. Sie können insbesondere, wie etwa bei Industrierobotern üblich, jeweils als Drehgelenk gebildet sein.

Die Gelenkarmabschnitte GAA sind von der Basis B ausgehend bis zu einem freien Ende des Roboterarms fortlaufend mit GAA1, GAA2, GAA3, GAA4, GAA5 und GAA6 bezeichnet. Die Maschinenachsen A sind von der Basis B ausgehend bis zum freien Ende des Roboterarms fortlaufend mit A1, A2, A3, A4, A5 und A6 bezeichnet. Der Gelenkarmabschnitt GAA1 dreht sich um die Maschinenachse A1, die in Axialrichtung durch den Mittelpunkt des Gelenkarmabschnitts GAA1 verläuft. Die Maschinenachse A2 verläuft quer zur Maschinenachse A1 und ist eine Schwenkachse, in der der Gelenkarmabschnitt GAA2 relativ zum Gelenkarmabschnitt GAA1 verschwenkt werden kann. Die Maschinenachse A3 verläuft quer zur Maschinenachse A2 und ist eine Schwenkachse, in der der Gelenkarmabschnitt GAA3 relativ zum Gelenkarmabschnitt GAA2 verschwenkt werden kann. Die Maschinenachse A4 ist eine Rotationachse des Gelenkarmabschnitts GAA4 relativ zum Gelenkarmabschnitt GAA3. Die Maschinenachse A5 ist eine Schwenkachse quer zur Maschinenachse A4, in der der Gelenkarmabschnitt GAA5 relativ zum Gelenkarmabschnitt GAA4 verschwenkt werden kann. Die letzte Maschinenachse A6 ist eine Rotationsachse, in der letzte Gelenkarmabschnitt GAA6 relativ zum vorletzten Gelenkarmabschnitt GAA5 drehbeweglich ist.

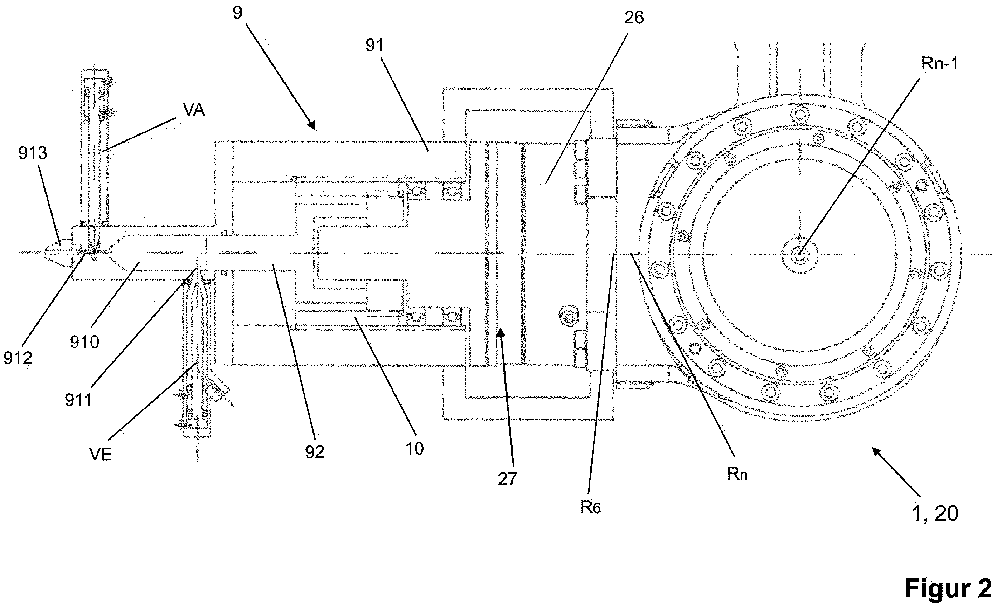

Die Figur 2 zeigt einen ersten Gelenkarmabschnitt 26 und einen zweiten Gelenkarmabschnitt 27 eines Gelenkarms eines Universal- oder Industrieroboters mit n Gelenkarmabschnitten. Beispielsweise kann der Roboter 1 der Figur 1 diesen Universal- oder Industrieroboter bilden. So können der zweite Gelenkarmabschnitt 27 insbesondere der von einer Roboterbasis, wie etwa der Basis B der Figur 1, entfernteste und in diesem Sinne letzte Gelenkarmabschnitt GAA6 und der erste Gelenkarmabschnitt 26 der vorletzte Gelenkarmabschnitt GAA5 des Roboters 1 sein.

Der erste Gelenkarmabschnitt 26 ist an seinem anderen, dem zweiten Gelenkarmabschnitt 27 in einem um eine Maschinenachse Rₙ₋₁ schwenkbaren Robotergelenk verbunden. Der zweite Gelenkabschnitt 27 hat eine Maschinenachse Rₙ, im gezeigten Ausführungsbeispiel die sechste Maschinenachse R₆, die den zweiten Gelenkarmabschnitt 27 rotatorisch antreibt. Der zweite Gelenkarmabschnitt 27 ist der letzte Gelenkarmabschnitt des Roboterarms und wird daher oft auch als Roboterhand bezeichnet.

Ein Werkzeug 9, das ein erstes Funktionselement 91 und ein zweites Funktionselement 92 umfasst, ist mit dem Gelenkarm verbunden. Dabei ist das erste Funktionselement 91 mit dem ersten Gelenkarmabschnitt 26 verbunden, insbesondere bewegungssteif verbunden. Das heißt, dass das erste Funktionselement 91 allen Bewegungen des ersten Gelenkarmabschnitts 26 folgt, insbesondere direkt folgt. Mit anderen Worten ist das erste Funktionselement 91 fest mit dem ersten Gelenkarmabschnitt 26 verbunden und kann im verbundenen Zustand nicht relativ zum ersten Gelenkarmabschnitt 26 bewegt werden.

Das zweite Funktionselement 92 ist mit dem zweiten Gelenkarmabschnitt 27 verbunden genauer ist das zweite Funktionselement 92 bewegungstechnisch mit der Maschinenachse Rₙ des zweiten Gelenkarmabschnitts 27 gekoppelt. Dabei treibt die angetriebenen Maschinenachse Rₙ direkt oder bevorzugt über eine Koppelungseinrichtung auf das zweite Funktionselement 92 ab.

Die Koppelungseinrichtung ist so ausgelegt, dass sie eine vorgegebene Bewegung der Maschinenachse Rₙ in eine resultierende Bewegung des zweiten Funktionselements 92 umwandelt. Im gezeigten Ausführungsbeispiel ist die vorgegebene Bewegung eine Drehbewegung oder Rotation, die resultierende Bewegung ist eine Linearbewegung oder Schubbewegung. Dabei bildet das erste Funktionselement 91 eine Führung für das zweite Funktionselement 92 in dessen Bewegungsrichtung.

Das erste Funktionselement 91 umfasst eine Materialkammer 910 die mit einem fließfähigen Material gefüllt werden kann, um die vorgegebene Montageaufgabe zu erfüllen. Die Materialkammer 910 hat einen Einlass 911 für Material und einen Auslass 912 für das Material. Im gezeigten Ausführungsbeispiel ist die Materialkammer 910 über ein Einlassventil VE, das pneumatisch geschaltet werden kann, mit einer Materialquelle für das verwendete Material verbunden. Der Auslass 912 weist ein entsprechendes Auslassventil VA auf. Wenn das Einlassventil VE geöffnet ist, um Material in die Materialkammer 910 zu lassen, ist das Auslassventil VA bevorzugt geschlossen. Ist das Auslassventil VA geöffnet, um Material aus der Materialkammer 910 für die Montagekammer 910 auszugeben, ist bevorzugt das Einlassventil VE geschlossen. Wenn die Materialkammer 910 gespült werden soll, können das Einlassventil VE und das Einlassventil gleichzeitig offen sein.

Die Figuren 2, 3 und 4 zeigen drei beispielhafte Anwendungen des Funktionsprinzips bei dem ein Werkzeug 9 mit einem Roboter wie beschrieben verbunden ist und die vorgegebene Bewegung der Maschinenachse Rₙ, die mit einem zweiten Funktionsglied 92 verbunden ist, in eine resultierende Bewegung des zweiten Funktionsglieds 92 umgewandelt ist. Dabei ist die vorgegebene Bewegung der jeweiligen Maschinenachse Rₙ unterschiedlich zu der jeweils resultierenden Bewegung des jeweiligen zweiten Funktionsglieds 92.

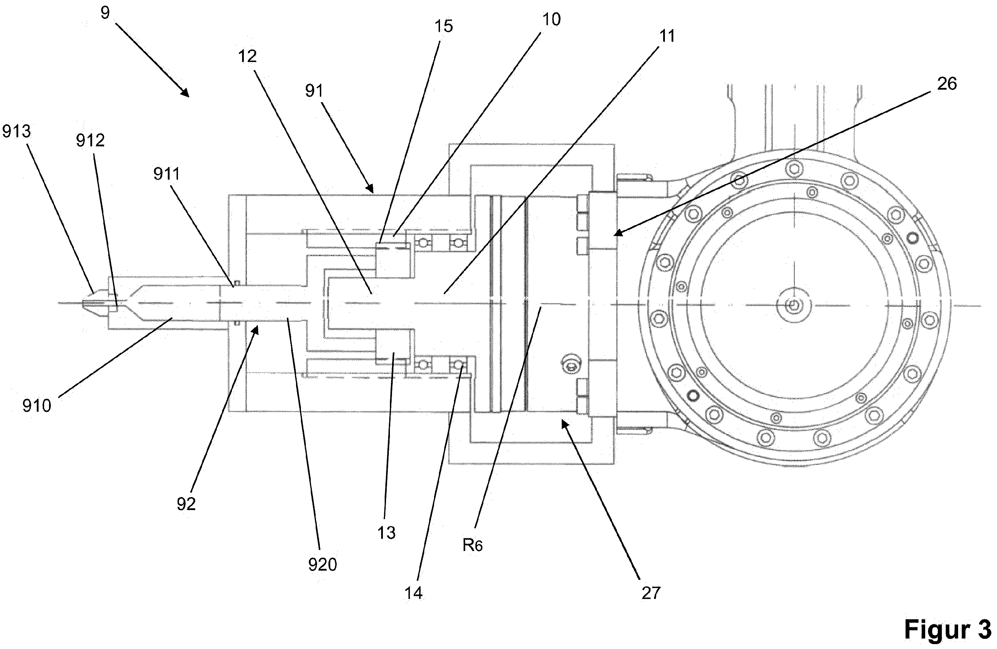

In der Figur 3 ist das Werkzeug 9 ein Werkzeug, mit dem ein fließfähiges Material kontrolliert abgegeben oder auf ein Werkstück aufgebracht werden kann. Das fließfähige Material kann zum Beispiel ein Klebstoff, eine Farbe, eine Pulver, eine Reinigungsmittel, etc. sein, die punktgenau an oder auf dem Werkstück aufgebracht werden müssen.

Das Werkzeug 9 umfasst das erste Funktionselement 91, das wie bereits beschrieben mit dem ersten Gelenkarmabschnitt 26 bewegungssteif verbunden ist, und das zweite Funktionselement 92, das mit der Maschinenachse R₆ des zweiten Gelenkarmabschnitts 27 gekoppelt ist.

Das erste Funktionselement 91 umfasst einen Behälter 910 für das fließfähige Material. Das Material kann in Kartuschen geliefert werden, die in den Behälter 910 eingegeben werden müssen. Umfasst ist ein automatischer Tausch der Kartuschen aus einem verbundenen Kartuschenmagazin.

Der Behälter 910 kann wiederfüllbar sein, was bedeuten kann, dass regelmäßig oder bei Bedarf Material nachgefüllt werden muss, zum Beispiel von Hand von einem Bediener, oder dass er dauerhaft mit einer Materialquelle verbunden ist, und Material je nach Bedarf automatisch in den Behälter 910 nachgefüllt wird. Es hängt von der Art der Montageaufgabe und der Verbrauchsmenge des Materials ab, welche Variante bevorzugt wird.

Der Behälter 910 kann über ein Leitungssystem mit einer Materialquelle verbunden und automatisch mit Material nachgefüllt werden. Dazu umfasst der Behälter 910 einen Einlass 911 für das von der Materialquelle kommende Material und einen Auslass 912, durch den das Material aus dem Behälter 910 abgegeben wird. Der Behälter 901 kann auch mit zwei oder mehr Materialquellen verbunden sein, wobei diese Materialien Ausgangsmaterialien sind, die erst im Behälter zu dem Material für die Montageaufgabe gemischt werden. Zum Mischen kann in dem Behälter eine Mischvorrichtung angeordnet sein, der Behälter kann beheizbar sein oder über eine Kühlung verfügen. Ist der Behälter 910 beheizbar, kann auch eine Düse 913, über die das Material abgegeben wird, beheizbar sein, um einem Erstarren oder Verdicken des Material vor dem Auftrag vorzubeugen.

Der Einlass 911 und der Auslass 912 können beispielsweise pneumatisch geöffnet und geschlossen werden. Bevorzugt ist der Einlass 911 geschlossen, wenn der Auslass 912 geöffnet ist, und der Auslass 912 ist geschlossen, wenn der Einlass 911 geöffnet ist. Das heißt, das Material kann von der Materialquelle nicht direkt auf das Werkstück aufgebracht werden.

Das erste Funktionselement 91 kann ein Gehäuse des Werkzeugs 9 bilden, das insbesondere das zweite Funktionselement 92 vor Beschädigung und/oder Verschmutzung schützt. An einer Innenumfangswand des ersten Funktionselements 91 ist eine Führung 10 ausgebildet, in der eine auf das zweite Funktionselement 92 wirkende Laufmutter 13 einwirkt, um das zweite Funktionselement 92 linear in den Behälter zu bewegen.

Das zweite Funktionselement 92 umfasst einen Ausgabekolben 920, der in den Behälter 910 hineinreicht und in den Behälter 910 hinein bewegt werden kann, um Material aus dem Behälter 910 durch den Auslass 912 zu verdrängen. Der Ausgabekolben 920 ist über eine Spindel 11 mit der Maschinenachse Rₙ des zweiten Gelenkarmabschnitts 27 gekoppelt. Die Spindel 11 ist in dem ersten Funktionselement 91 in Lagern 14 drehbeweglich gelagert und umfasst ein freies Ende 12 mit einem Außengewinde auf das die Laufmutter 13 aufgeschraubt ist. Die Laufmutter 13 umfasst Führungselemente 15, die mit der Führung 10 in dem ersten Funktionselement 91 zusammenwirken.

Wird jetzt die Spindel 11 durch die Maschinenachse R₆ des zweiten Gelenkarmabschnitts 27 drehangetrieben, kann die Laufmutter 13 nicht mitdrehen, da das Mitdrehen durch die Verbindung der Führung 10 und der Führungselemente 15 verhindert wird. Stattdessen wird die Laufmutter 13 entlang dem Ende 12 linear bewegt. Bevorzugt ist die Laufmutter 13 fest mit dem Ausgabekolben 920 verbunden oder mit diesem in einem Stück in einem Guss- oder Sinterverfahren geformt, so dass die Bewegung der Laufmutter 13 auf den Ausgabekolben 920 übertragen wird. Das heißt, der Ausgabekolben 920 kann je nach Drehrichtung der Maschinenachse Rₙ in den Behälter 910 hinein oder aus dem Behälter 910 heraus bewegt werden.

Erfindungsgemäß fallen eine Rotationsachse der Spindel 11, eine Mittellängsachse des zweiten Funktionselements 92 und die Rotationsachse oder Maschinenachse R₆ des zweiten Gelenkarmabschnitts 27 zusammen.

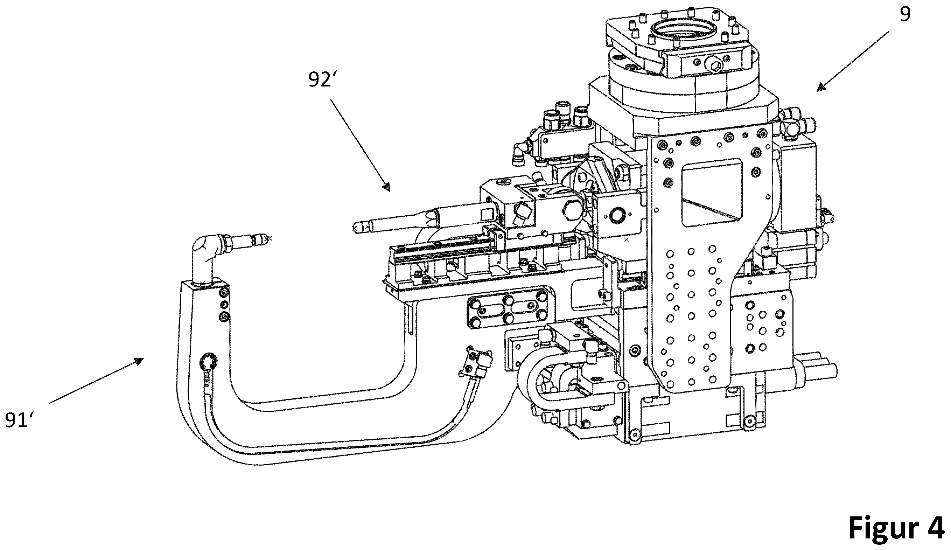

Die Figur 4 zeigt ein weiteres Werkzeug 9'. Bei dem weiteren Werkzeug 9' handelt es sich um eine Schweißzange, insbesondere für das Widerstandsschweißen.

Das zweite Funktionselement 92' bildet bei diesem Werkzeug einen beweglichen Elektrodenarm, das ersten Funktionselement 91' eine starre Gegenelektrode.

Auch bei diesem Werkzeug wird das erste Funktionselement 91' mit dem ersten Gelenkarmabschnitt 26 so verbunden, dass es jede Bewegung des ersten Gelenkarmabschnitts 26 mitmacht. Das zweite Funktionselement 92' wird mit dem zweiten Gelenkarmabschnitt 27 gekoppelt und von der Maschinenachse Rₙ des zweiten Gelenkarmabschnitts angetrieben. Dabei wird die Rotationsbewegung der Maschinenachse R₆ in eine Linearbewegung des zweiten Funktionselements 92' umgewandelt. Das Prinzip der Umwandlung entspricht dem zur Figur 3 beschriebenen Prinzip und wird daher nicht nochmals beschrieben,

### Bezugszeichen

- 1: Roboter, Gelenkarmroboter, Industrieroboter
- 9, 9': Werkzeug
- 10: Führung
- 11: Spindel
- 12: Ende
- 13: Laufmutter
- 14: Lager
- 15: Führungselement
- 91, 91': erstes Funktionselement
- 910: Materialkammer
- 911: Einlass
- 912: Auslass
- 913: Düse
- 92, 92': zweites Funktionselement
- 26: erster Gelenkarmabschnitt
- 27: zweiter Gelenkarmabschnitt
- A: Maschinenachse
- B: Basis
- GAA: Gelenkarmabschnitt
- VA: Auslassventil
- VE: Einlassventil
- k: Anzahl Maschinenachse
- n: Anzahl Gelenkarmabschnitte

## Patentansprüche

1. System zur kontrollierten Abarbeitung einer Montage- oder Fertigungsaufgabe, das System umfassend:
a. einen n-achsigen Roboter (1), vorzugsweise Industrie- oder Universalroboter, mit einer Basis und einem mit der Basis verbundenen Gelenkarm (20), der in n Maschinenachsen (R₁ bis Rₙ) relativ zur Basis beweglich ist und einen ersten Gelenkarmabschnitt (26) und einen zweiten Gelenkarmabschnitt (27) aufweist, die in einem Robotergelenk um eine der Maschinenachsen (Rₙ) drehbeweglich verbunden sind,
b. eine Robotersteuerung zur Steuerung und/oder Regelung der Bewegungen des Gelenkarms (20) in den n Maschinenachsen (R₁ bis Rₙ),
c. ein Werkzeug (9) für die Montageaufgabe, mit einem ersten Funktionsglied (91, 91') und einem zweiten Funktionsglied (92, 92'),
wobei
d. das Werkzeug (9) eine Schweißzange ist und das zweite Funktionsglied (92') einen beweglichen Elektrodenarm und das erste Funktionsglied (91') eine starre Gegenelektrode bildet
oder
e. das Werkzeug (9) ein Werkzeug zur kontrollierten Abgabe eines fließfähigen Materials ist, das erste Funktionsglied (91) einen Behälter (910) für das fließfähige Material umfasst und das zweite Funktionsglied (92) einen Ausgabekolben (920) umfasst, der in den Behälter (910) hineinreicht und in den Behälter (910) hinein bewegt werden kann, um Material aus dem Behälter (910) durch einen Auslass (912) zu verdrängen,
wobei
f. das erste Funktionsglied (91, 91') mit dem ersten Gelenkarmabschnitt (26) gekoppelt ist, so dass es vom ersten Gelenkarmabschnitt (26) ausführbare Bewegungen mitmacht,
g**.** das zweite Funktionsglied (92, 92') mit dem zweiten Gelenkarmabschnitt (27) gekoppelt ist, so dass es vom zweiten Gelenkarmabschnitt (27) im Robotergelenk (RG) relativ zum ersten Gelenkarmabschnitt (26) und dem ersten Funktionsglied (91, 91') ausführbare Bewegungen mitmacht, um die Montageaufgabe abzuarbeiten, und
h. die Robotersteuerung dazu eingerichtet ist, die vom zweiten Gelenkarmabschnitt (27) im Robotergelenk (RG) relativ zum ersten Gelenkarmabschnitt (26) ausführbaren Bewegungen nach Position und/oder Geschwindigkeit zu steuern oder zu regeln und dadurch eine Bewegung und/oder Funktion des zweiten Funktionsglieds (92, 92') kontrolliert zu aktivieren, **dadurch gekennzeichnet, dass**
i. das erste Funktionsglied (91, 91') mit dem ersten Gelenkarmabschnitt (26) fest verbunden ist, und nicht relativ zum ersten Gelenkarmabschnitt (26) bewegbar ist,
j. das zweite Funktionsglied (92, 92') über eine Spindel (11) mit der Maschinenachse (Rₙ) des zweiten Gelenkarmabschnitts (27) gekoppelt ist,
k. die Spindel (11) in dem ersten Funktionsglied (91, 91') in Lagern (14) drehbeweglich gelagert ist und ein freies Ende (12) mit einem Außengewinde umfasst, auf das eine Laufmutter (13) aufgeschraubt ist,
l. die Laufmutter (13) Führungselemente (15) umfasst, die mit einer an einer Innenumfangswand des ersten Funktionsglieds (91, 91') ausgebildeten Führung (10) zusammenwirken, so dass, wenn die Spindel (11) durch die Maschinenachse des zweiten Gelenkarmabschnitts (27) drehangetrieben wird, die Laufmutter (13) nicht mitdrehen kann, da das Mitdrehen durch die Verbindung der Führung (10) und der Führungselemente (15) verhindert wird, und stattdessen die Laufmutter (13) entlang dem Ende (12) linear bewegt wird,
m. die Laufmutter (13) auf das zweite Funktionsglied (92, 92') einwirkt, um das zweite Funktionsglied (92, 92') linear zu bewegen, und
n. die Maschinenachse (Rₙ) des zweiten Gelenkarmabschnitts (27), eine Rotationsachse der Spindel (11) und eine Mittellängsachse des zweiten Funktionsglieds (92, 92') zusammenfallen.

2. System nach Anspruch 1, wobei entweder der erste Gelenkarmabschnitt (26) oder vorzugsweise der zweite Gelenkarmabschnitt (27) ein von der Basis über die n Maschinenachsen (R₁ bis Rₙ) entfernter, letzter Gelenkarmabschnitt (27) des Roboters ist.

3. System nach einem der vorhergehenden Ansprüche, wobei die Maschinenachse (R₆), in Bezug auf die der zweite Gelenkarmabschnitt (27) relativ zum ersten Gelenkarmabschnitt (26) beweglich ist, die n-te Maschinenachse (R₆) des Roboters und n eine natürliche Zahl größer 2 und vorzugsweise gleich 6 ist.

4. System nach einem der vorhergehenden Ansprüche, wobei die n-te Maschinenachse (R₆) eine Rotationsachse, eine Schubachse oder eine Rotationsschubachse des zweiten Gelenkarmabschnitts (27) ist.

5. System nach einem der vorhergehenden Ansprüche, wobei die n-te Maschinenachse (R₆) direkt oder über ein Koppelglied mit dem zweiten Funktionsglied (92, 92') verbunden oder verbindbar ist.

6. System nach einem der vorhergehenden Ansprüche, wobei der zweite Gelenkarmabschnitt eine Roboterhand (27) ist.

7. System nach einem der vorhergehenden Ansprüche, wobei es sich bei der Montageaufgabe um eine Montageaufgabe auf dem Gebiet der Herstellung, insbesondere der Karosserieherstellung, für Flugkörper, Land- und Wasserfahrzeuge handelt.

8. Verfahren zur kontrollierten Abarbeitung einer Montage- oder Fertigungsaufgabe mittels eines Systems nach einem der Ansprüche 1-7.

9. Verfahren nach Anspruch 8, wobei das zweite Funktionsglied (92, 92') von dem ersten Funktionsglied (91, 91') linear geführt wird.

10. Verfahren nach einem der Ansprüche 8 und 9, wobei der n-achsige Roboter (1) ein Industrieroboter ist, der eine Basis und n Bewegungsachsen für einen Roboterarm (20) mit n Gelenkarmabschnitten hat und der n-te Gelenkarmabschnitt die Roboterhand bildet. (27).

## Claims

1. A system for executing an assembly task or production task in a verified way, the system comprising:
a. an n-axis robot (1), preferably an industrial robot or universal robot, having a base (B) and an articulated arm (20) which is connected to the base (B) and can be moved in n machine axes (R₁ to Rₙ) relative to the base (B) and comprises a first articulated-arm portion (26) and a second articulated-arm portion (27) which are connected in a robot joint such that they can be moved rotationally about one of the machine axes (Rₙ);
b. a robot controller for controlling and/or regulating the movements of the articulated arm (20) in the n machine axes (R₁ to Rₙ);
c. a tool (9) for the assembly task, having a first functional element (91, 91') and a second functional element (92, 92'),
wherein
d. the tool (9) is a pair of welding tongs, the second functional element (92') forms a moving electrode arm, and the first functional element (91') forms a rigid counter-electrode,
or
e. the tool (9) is a tool for dispensing a fluid material in a verified way, the first functional element (91) comprises a container (910) for the fluid material, and the second functional element (92) comprises a discharge piston (920) which extends into the container (910) and can be moved into the container (910) in order to displace material from the container (910) through an outlet (912),
wherein
f. the first functional element (91, 91') is coupled to the first articulated-arm portion (26) such that it participates in movements which can be performed by the first articulated-arm portion (26),
g. the second functional element (92, 92') is coupled to the second articulated-arm portion (27) such that it participates in movements which can be performed by the second articulated-arm portion (27) relative to the first articulated-arm portion (26) and first functional element (91, 91') in the robot joint, in order to execute the assembly task, and
h. the robot controller is designed to control and/or regulate the position and/or speed of the movements which can be performed by the second articulated-arm portion (27) relative to the first articulated-arm portion (26) in the robot joint, so as to activate a movement and/or function of the second functional element (92, 92') in a verified way,
**characterised in that**
i. the first functional element (91, 91') is fixedly connected to the first articulated-arm portion (26) and cannot be moved relative to the first articulated-arm portion (26),
j. the second functional element (92, 92') is coupled to the machine axis (Rₙ) of the second articulated-arm portion (27) via a spindle (11),
k. the spindle (11) is mounted by bearings (14) such that it can be moved rotationally in the first functional element (91, 91') and comprises a free end (12) having an external thread onto which a travelling nut (13) is screwed,
l. the travelling nut (13) comprises guiding elements (15) which co-operate with a guide (10) formed on an inner circumferential wall of the first functional element (91, 91'), such that if the spindle (11) is rotationally driven by the machine axis (Rₙ) of the second articulated-arm portion (27), the travelling nut (13) cannot rotate along with it, since this is prevented by the connection between the guide (10) and the guiding elements (15), and the travelling nut (13) is instead linearly moved along the end (12),
m. the travelling nut (13) which acts on the second functional element (92, 92') has the effect of linearly moving the second functional element (92, 92'), and
n. the machine axis (Rₙ) of the second articulated-arm portion (27), a rotational axis of the spindle (11) and a central longitudinal axis of the second functional element (92, 92') coincide.

2. The system according to claim 1, wherein either the first articulated-arm portion (26) or preferably the second articulated-arm portion (27) is a final articulated-arm portion (27) of the robot (1) which is distanced from the base (B) by the n machine axes (R₁ to Rₙ).

3. The system according to any one of the preceding claims, wherein the machine axis (R₆) in relation to which the second articulated-arm portion (27) can be moved relative to the first articulated-arm portion (26) is the n^{th} machine axis (R₆) of the robot (1) and n is a natural number which is greater than 2 and preferably equal to 6.

4. The system according to any one of the preceding claims, wherein the n^{th} machine axis (R₆) is a rotational axis, a sliding axis or a rotational sliding axis of the second articulated-arm portion (27).

5. The system according to any one of the preceding claims, wherein the n^{th} machine axis (R₆) is or can be connected to the second functional element (92, 92'), directly or via a coupling element.

6. The system according to any one of the preceding claims, wherein the second articulated-arm portion is a robot hand (27).

7. The system according to any one of the preceding claims, wherein the assembly task is an assembly task within the field of manufacturing, in particular body manufacturing, for missiles, land vehicles and watercraft.

8. A method for executing an assembly task or production task in a verified way by means of a system according to any one of claims 1 to 7.

9. The method according to claim 8, wherein the second functional element (92, 92') is guided linearly by the first functional element (91, 91').

10. The method according to any one of claims 8 and 9, wherein the n-axis robot (1) is an industrial robot (1) and has a base (B) and n movement axes for a robot arm (20) having k articulated-arm portions, and the k^{th} articulated-arm portion forms the robot hand (27).

## Revendications

1. Système pour exécuter de manière contrôlée une tâche d'assemblage ou de fabrication, le système comprenant :
a. un robot à n axes (1), de préférence un robot industriel ou universel, comportant une base (B) et un bras articulé (20) relié à la base (B) et mobile dans n axes mécaniques (R₁ à Rₙ) par rapport à la base (B) et présentant une première partie de bras articulé (26) et une seconde partie de bras articulé (27) qui sont reliées dans une articulation de robot de manière mobile en rotation autour d'un des axes mécaniques (Rₙ) ;
b. un élément de commande de robot pour commander et / ou réguler les mouvements du bras articulé (20) dans les n axes mécaniques (R₁ à Rₙ) ;
c. un outil (9) pour la tâche d'assemblage, comportant un premier élément fonctionnel (91, 91') et un second élément fonctionnel (92, 92'),
d. l'outil (9) étant une pince à souder, le second élément fonctionnel (92') formant un bras d'électrode mobile, et le premier élément fonctionnel (91') formant une contre-électrode rigide,
ou
e. l'outil (9) étant un outil pour distribuer de manière contrôlée un matériau fluide, le premier élément fonctionnel (91) comprenant un conteneur (910) pour le matériau fluide, et le second élément fonctionnel (92) comprenant un piston de distribution (920) qui pénètre dans le conteneur (910) et peut être déplacé dans le conteneur (910) pour déplacer du matériau depuis le conteneur (910) par une sortie (912),
f. le premier élément fonctionnel (91, 91') étant couplé à la première partie de bras articulé (26) de sorte qu'il suit des mouvements exécutables par la première partie de bras articulé (26),
g. le second élément fonctionnel (92, 92') étant couplé à la seconde partie de bras articulé (27) de sorte qu'il suit des mouvements exécutables par la seconde partie de bras articulé (27) dans l'articulation de robot par rapport à la première partie de bras articulé (26) et au premier élément fonctionnel (91, 91') pour exécuter la tâche d'assemblage, et
h. l'élément de commande de robot étant configuré pour commander ou réguler la position et / ou la vitesse des mouvements exécutables par la seconde partie de bras articulé (27) dans l'articulation de robot par rapport à la première partie de bras articulé (26) et ainsi activer de manière contrôlée un mouvement et / ou une fonction du second élément fonctionnel (92, 92'),
**caractérisé en ce que**
i. le premier élément fonctionnel (91, 91') est relié de manière fixe à la première partie de bras articulé (26) et n'est pas déplaçable par rapport à la première partie de bras articulé (26),
j. le second élément fonctionnel (92, 92') étant couplé à l'axe mécanique (Rₙ) de la seconde partie de bras articulé (27) par une broche (11),
k. la broche (11) étant montée de manière mobile en rotation dans le premier élément fonctionnel (91, 91') par des paliers (14) et comprenant une extrémité libre (12) comportant un filetage extérieur sur lequel est vissé un écrou mobile (13),
l. l'écrou mobile (13) comprenant des éléments de guidage (15) qui coopèrent avec un guidage (10) formé sur une paroi circonférentielle intérieure du premier élément fonctionnel (91, 91'), de sorte que l'écrou mobile (13) ne peut pas tourner avec la broche (11) entraînée en rotation par l'axe mécanique (Rₙ) de la seconde partie de bras articulé (27), puisque cette rotation est empêchée par la liaison du guidage (10) et des éléments de guidage (15), et au lieu de cela, l'écrou mobile (13) est déplacé linéairement le long de l'extrémité (12),
m. l'écrou mobile (13) agissant sur le second élément fonctionnel (92, 92') pour le déplacer linéairement, et
n. l'axe mécanique (Rₙ) de la seconde partie de bras articulé (27), un axe de rotation de la broche (11) et un axe longitudinal central du second élément fonctionnel (92, 92') coïncidant.

2. Système selon la revendication 1, dans lequel soit la première partie de bras articulé (26) soit de préférence la seconde partie de bras articulé (27) est une dernière partie de bras articulé (27) du robot (1), éloignée de la base (B) par l'intermédiaire des n axes mécaniques (R₁ à Rₙ).

3. Système selon l'une quelconque des revendications précédentes, dans lequel l'axe mécanique (R₆), par rapport auquel la seconde partie de bras articulé (27) est mobile par rapport à la première partie de bras articulé (26), est le n-ième axe mécanique (R₆) du robot (1) et n est un nombre naturel supérieur à 2 et de préférence égal à 6.

4. Système selon l'une quelconque des revendications précédentes, dans lequel le n-ième axe mécanique (R₆) est un axe de rotation, un axe de poussée ou un axe de rotation et de poussée de la seconde partie de bras articulé (27).

5. Système selon l'une quelconque des revendications précédentes, dans lequel le n-ième axe de mécanique (R₆) est ou peut être relié directement ou via un élément de couplage au second élément fonctionnel (92, 92').

6. Système selon l'une quelconque des revendications précédentes, dans lequel la seconde partie de bras articulé est une main de robot (27).

7. Système selon l'une quelconque des revendications précédentes, dans lequel la tâche d'assemblage est une tâche d'assemblage dans le domaine de la fabrication, en particulier de la fabrication de carrosseries, pour missiles, véhicules terrestres et véhicules nautiques.

8. Procédé pour exécuter de manière contrôlée une tâche d'assemblage ou de fabrication au moyen d'un système selon l'une quelconque des revendications 1 à 7.

9. Procédé selon la revendication 8, dans lequel le second élément fonctionnel (92, 92') est guidé linéairement par le premier élément fonctionnel (91, 91').

10. Procédé selon l'une quelconque des revendications 8 et 9, dans lequel le robot à n axes (1) est un robot industriel (1) comprenant une base (B) et n axes de mouvement pour un bras de robot (20) comportant k parties de bras articulé, la k-ième partie de bras articulé formant la main de robot (27).
